# EUROPÄISCHE PATENTSCHRIFT

(11) **EP 0 380 912 B1**
(45) Veröffentlichungstag und Bekanntmachung des Hinweises auf die Patenterteilung: **05.05.1993**
(21) Anmeldenummer: 90100139.6
(22) Anmeldetag: 04.01.1990
(51) Int. Cl.: A01C 7/04

(54) **Einzelkornsämaschine**
Spacer drill
Semoir de précision

(30) Priorität: 31.01.1989 DE 3902732; 30.09.1989 DE 8911696 U
(43) Veröffentlichungstag der Anmeldung: 08.08.1990
(73) Patentinhaber: ACCORD Landmaschinen Heinrich Weiste & Co. GmbH, D-59494 Soest (DE)
(72) Erfinder: Meyer, Otfried, D-5168 Nideggen-Schmidt (DE); Bach, Alexander, D-5160 Düren 4 (DE); Schneiders, Walter, D-5160 Düren (DE)
(74) Vertreter: Habbel, Hans-Georg, Dipl.-Ing.

(56) Entgegenhaltungen:
- DE-A- 2 747 866
- DE-C- 300 387
- FR-A- 1 108 912
- FR-E- 75 683
- Prospekt Accord-Fähse "Monopill" 1987

## Beschreibung

Die Erfindung bezieht sich auf eine Einzelkornsämaschine gemäß dem Oberbegriff des Patentanspruches 1, wie diese breits im Prospekt "ACCORD-FÄHSE MONOPILL" vorgestellt wurde.

In der EP-B1-0 141 249 wird eine Einzelkornsämaschine beschrieben, die ebenfalls mit einem Saatgutbehälter ausgerüstet ist und weiterhin ein radial nach außen offene Samenzellen zur Einzelaufnahme von Saatkörnern aufweisendes Zellenrad aufweist, das weitgehend von einem Gehäuse umschlossen ist. Mit diesem Zellenrad arbeitet bei der in der EP-B1-0 141 249 beschriebenen Einrichtung ein weiteres Särad zusammen.

In der AT-PS 301 233 wird eine Einzelkornsämaschine beschrieben, bei welcher der Saatgutbehälter an seinem Unterteil eine Auslauföffnung aufweist, deren Größe durch einen Schieber einstellbar ist. Das Saatgut gelangt aus dem Saatgutbehälter durch die schieberbegrenzte Auslauföffnung in einen Schöpfraum, aus dem das Saatgut durch eine Schöpfzelle aufgenommen werden kann. Trotz Begrenzung der Auslauföffnung kann in dem eigentlichen Schöpfraum ein Überdruck entstehen, der zu Doppelbelegungen der Schöpfzellen führen kann.

Um überschüssige Körner zu entfernen, ist es bereits aus der DE-PS 27 02 418 bekannt, eine Bürste vorzusehen, deren Borsten auf die Oberseite einer mit Schöpfzellen versehenen Trommel einer Drillmaschine gerichtet sind. Die Bürste dient dazu, alle überschüssigen Körner zu entfernen, die möglicherweise an der Trommelfläche haften oder wenn bestimmte Schöpfzellen mehrere Körner aufgenommen haben.

Aus der aus dem Jahr 1916 stammenden DE-A-30 03 87 ist eine Sämaschine mit Schöpftrommel bekanntgeworden, bei der vor der Auslauföffnung eines Saatguttrichters ein Schieber als Begrenzungsmittel vorgesehen ist. Die Schöpftrommel schöpft aus dem in ihrem unteren Teil enthaltenen Saatgutvorrat und kippt bei Doppelbelegungen der Schöpfzellen die Doppelbelegungen wieder in den Saatgutvorrat ab. Die Schöpfzellen sind nicht radial nach außen offen, und eine hohe Präzision, wie sie heute bei modernen Sämaschinen verlangt wird, ist mit dieser einfach aufgebauten Einrichtung nicht erzielbar.

Aus der FR-A-11 08 912 ist eine Einzelkornsämaschine bekanntgeworden, bei welcher sich an die über einen Schieber hinsichtlich ihrer Größe regelbaren Auslauföffnung aus dem Vorratstrichter eine Saatgutleitung anschließt, die zu den nach außen hin offenen Samenzellen der Säscheibe führt. Bei Doppelbelegungen der einzelnen Säzellen ist eine Rückführung des zweiten Samenkornes überhaupt nicht vorgesehen.

In dem gattungsbildenden Prospekt "ACCORD-FÄHSE MONOPILL", der seit 1986 in der Öffentlichkeit verteilt wurde, ist eine Einzelkornsämaschine beschrieben, die mit einer einzigen Säscheibe arbeitet, bei welcher speziell geformte und angeschutete Samenzellen einen gleichbleibenden Abstand garantieren.

Die umlaufende Säscheibe nimmt aus einer Saatgutkammer jeweils ein Samenkorn auf und legt es nach einer Umdrehung von etwa 300° im Boden ab.

Diese bekannte Einrichtung hat sich ausgezeichnet bewährt, aber es wurde überraschenderweise festgestellt, daß dann, wenn sich ungünstige Boden- und Kombinationsverhältnisse addieren, eine Überfüllung der Saatgutkammer eintreten konnte und dabei Doppelbelegungen der Samenzellen eintreten konnten.

Der Erfindung liegt die Aufgabe zugrunde, die gattungsbildende Einrichtung dahingehend zu verbessern, daß diese zwar seltenen, aber doch ab und zu möglichen Doppelbelegungen vermieden werden.

Diese der Erfindung zugrundeliegende Aufgabe wird durch die Lehre des Hauptanspruches gelöst.

Mit anderen Worten ausgedrückt wird vorgeschlagen, die eigentliche Saatgutkammer in ihrem Füllvolumen zu begrenzen, so daß dadurch kein zu starker Druck auf die einzelnen Samenkörner ausgeübt wird, wodurch sonst die gefürchtete Doppelbelegung herbeigeführt wird, wobei die Saatgutkammer in zwei Räume unterteilt wird, von denen der der Saatgutzuführung zugewandte Raum als Schöpf- und Vorratskammer dient, während in dem hinter dem Wandteil liegenden Raum die Rückführung der Doppelbelegung erfolgt.

Ein Ausführungsbeispiel der Erfindung wird nachfolgend anhand der Zeichnung beschrieben. Die Zeichnung zeigt in
- Fig. 1: eine Ansicht auf das Innere des neuen Einzelkornsäaggregates, in
- Fig. 2: einen Schnitt gemäß der Linie 2 - 2 in Fig. 1.

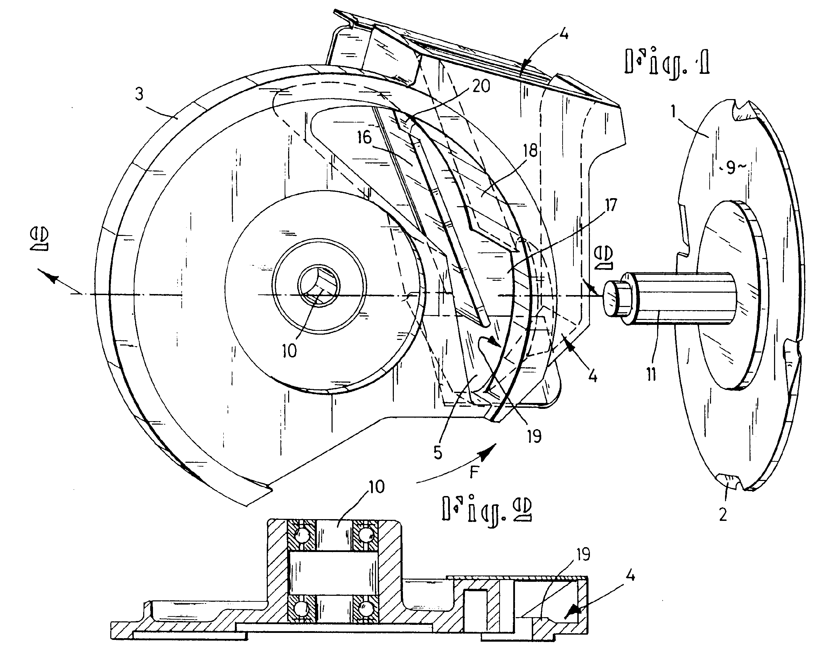

In den Zeichnungen ist ein Gehäuse 3 eines Einzelkornsäaggregates dargestellt. Dieses Gehäuse 3 ist mit einer Saatgutzuführung 4 ausgerüstet, wobei die Saatgutzuführung 4 in eine im Gehäuse 3 ausgearbeitete Saatgutkammer 5 mündet. Mit 1 ist eine Säscheibe bezeichnet, die über eine Welle 11 in einer entsprechenden Lagerung 10 des Gehäuses 3 angeordnet ist und durch in der Zeichnung nicht dargestellte Mittel umlaufend angetrieben wird. Die Umlaufrichtung der Säscheibe 1 ist in der Zeichnung durch den Pfeil F verdeutlicht.

Auf der Innenseite 9 sind angeschutete Samenzellen 2 ausgenommen, die radial nach außen offen sind.

Innerhalb der Saatgutkammer 5 ist vor einer Mündung 17 der Saatgutzuführung 4 ein Wandteil 16 angeordnet, das etwa bis zur unteren Kante der Mündung 17 reicht. Die Mündung 17 ist dabei in einer Wand 18 ausgenommen, die zur Saatgutkammer 5 hin die Saatgutzuführung 4 begrenzt, und zwar schlitzartig ausgenommen, so daß dadurch eine Wulst 19 geschaffen wird, die den Ausfluß der Samenkörner aus der Saatgutzuführung 4 in die eigentliche Saatgutkammer 5 begrenzt. Im oberen Bereich des Wandteiles 16 ist eine Ausnehmung 20 vorgesehen, die in ihrer Erstreckung etwa den angeschuteten Samenzellen 2 der Säscheibe 1 entspricht.

Bei Betrieb der vorbeschriebenen Einrichtung läuft die Säscheibe 1 in Richtung des Pfeiles F um und nimmt in den angeschuteten Samenzellen 2 jeweils ein einzelnes Samenkorn aus der Saatgutkammer 5 oder aus der durch das Wandteil 16 gebildeten Vorratskammer auf. Versuche haben ergeben, daß bei Einsatz dieses Wandteiles 16, das als Auslaufbegrenzer wirkt, Doppelbelegungen auch bei ungünstigsten, sich addierenden Verhältnissen nicht mehr eintreten.

## Patentansprüche

1. Einzelkornsämaschine mit einer radial nach außen offenen, angeschutete Samenzellen (2) zur Einzelaufnahme von Saatkörnern aufweisenden Säscheibe (1), die weitgehend von einem Gehäuse (3) umschlossen um eine im wesentlichen horizontal verlaufende Achse drehbar ist, wobei in das Gehäuse (3) in eine Saatgutkammer (5) eine Saatgutzuführung (4) mündet, dadurch gekennzeichnet, daß die Mündung (17) der Saatgutzuführung (4) in die Saatgutkammer (5) durch ein als Begrenzer wirkendes Wandteil (16) abgedeckt ist, das von der oberen Wand der Saatgutkammer (5) bis in den unteren Bereich der Mündung (17) reicht und in seinem oberen, den angeschuteten Samenzellen gegenüberliegenden Bereich eine kleine Ausnehmung (20) aufweist.

2. Einzelkornsämaschine nach Anspruch 1, dadurch gekennzeichnet, daß die Mündung (17) als Einschnitt in der zur Saatgutkammer (5) hin gerichteten Wand (18) ausgebildet ist und derart einen Wulst (19) schafft.

## Claims

1. A seed-spacing drill with a sowing disk (1) comprising radially outwardly open, chute-like seed cells (2) for individual accommodation of seed grains, which disk (1) is extensively enclosed by a housing (3) and rotatable about a substantially horizontal axis, a seed supply line (4) opening into a seed chamber (5) in the housing (3), characterized in that the opening (17) of the seed supply line (4) into the seed chamber (5) is covered by a wall part (16) acting as a delimiter, said wall part (16) extending from the upper wall of the seed chamber (5) as far as the lower area of the opening (17) and comprising a small recess (20) in its upper area opposite the chute-like seed cells.

2. A seed-spacing drill according to claim 1, characterized in that the opening (17) is constructed as a notch in the wall (18) facing the seed chamber and thereby forms a bead (19).

## Revendications

1. Semoir de précision avec un disque de semoir (1) présentant des godets à semences (2) allongés, ouverts vers l'extérieur dans le sens radial, pour prélever séparément des grains, qui est renfermé pour l'essentiel dans un boîtier (3) avec possibilité de rotation autour d'un axe sensiblement horizontal, une arrivée de semences (4) débouchant à l'intérieur du boîtier (3) dans une chambre à semences (5), caractérisé en ce que l'embouchure (17) de l'arrivée des semences (4) dans la chambre à semences (5) est couverte par une partie formant cloison (16) jouant le rôle d'un limiteur, qui va de la paroi supérieure de la chambre à semences (5) au secteur inférieur de l'embouchure (17) et présente dans son secteur supérieur faisant face aux godets à grains allongés un petit évidement (20).

2. Semoir de précision selon la revendication 1, caractérisé en ce que l'embouchure (17 est conformée comme une incision dans la paroi (18) orientée vers la chambre à semences (5) et forme ainsi une saillie (19).
